Europäisches Patentamt

European Patent Office

Office européen des brevets

(11) Publication number: **0 386 885**
**A1**

## EUROPEAN PATENT APPLICATION

(21) Application number: **90301227.6**

(22) Date of filing: **06.02.90**

(51) Int. Cl.5: **A01G 9/00**

---

The title of the invention has been amended (Guidelines for Examination in the EPO, A-III, 7.3).

(30) Priority: **07.02.89 CA 590381**

(43) Date of publication of application:
**12.09.90 Bulletin 90/37**

(84) Designated Contracting States:
**AT BE CH DE DK ES FR GB GR IT LI LU NL SE**

(71) Applicant: **Bergman, Randal Edwin**
**6212- 142nd Street**
**Surrey, British Columbia V3W 5M3(CA)**

(72) Inventor: **Bergman, Randal Edwin**
**6212- 142nd Street**
**Surrey, British Columbia V3W 5M3(CA)**

(74) Representative: **Jones, Michael Raymond et al**
**HASELTINE LAKE & CO. Hazlitt House 28**
**Southampton Buildings Chancery Lane**
**London WC2A 1AT(GB)**

---

(54) **Bulb package facilitating the planting of a bulb.**

(57) An apparatus and method for marketing and planting plant bulbs. The apparatus includes a bag (14) for enclosing a plant bulb (12), a filament (16) attached to the bag (14) for lowering the bag (14) to a preferred depth in a planting hole, and an identifier element (22) attached to the filament (16) for identifying the variety of the plant bulb (12) and the colour of the flowers produced by the bulb (12).

FIG. I

EP 0 386 885 A1

## APPARATUS FOR PLANTING A BULB AND A PACKAGE CONTAINING THE APPARATUS

This invention relates to an apparatus and method for marketing plant bulbs. More particularly, but not exclusively, this invention pertains to an apparatus and method for planting a plant bulb at a preferred depth and for labelling the identity of the plant bulb and the colour of the resultant flower.

Currently, plant bulbs are sold in bulk, generally without packaging. The customer typically selects bulbs of the desired variety and flower colour from different bins or baskets at the nursery or other retail outlet. Often, the selected bulbs are transferred from one parcel to another prior to planting. When the bulbs are planted the customer may have lost track of the variety or flower colour of each individual bulb, unless he has laboriously labelled each selection. The present invention provides a packaging which eliminates the need for manual labelling, and which allows bulbs to be readily identified even after planting.

In most cases it is advisable to plant bulbs at a preferred depth in order to achieve optimal plant growth. The preferred depth varies, depending on the bulb variety. Currently, it is necessary for the gardener to painstakingly measure the depth of the planting hole for each variety of bulb. The present invention also overcomes this problem by providing a predetermined marking on the planting apparatus so that each bulb can easily be planted at its preferred depth.

The prior art discloses a variety of bulb planting devices and methods. Typically, such devices are adapted to facilitate recovery of the bulbs after the growing season is over. For example, United States patent No. 3,415,012 granted to A. Stubbmann on December 10, 1968 discloses a bulb planting and recovery device comprising an elongated bag having a closed end and an open mouth. The Stubbmann bag is formed from limp, open netting which is inert in soil.

The present invention, by contrast, is not adapted primarily for recovery of plant bulbs and thus the bag portion may be made of biodegradable rather than inert material. Further, it is not necessary for the bag of the present invention to have an open mouth to allow for recovery of the bulb enclosed therein. The bag of the present invention is also smaller and hence cheaper to manufacture than the Stubbmann device; this is achieved by providing a filament attached to the bag to flag the above-ground location and identity of the plant bulb rather than by placing a label on the bag itself.

Other prior art gardening devices, such as those described in United States patent No. 2,394,192 granted to C. H. Mann on February 5, 1946; and, United States patent No. 2,945,323 granted to H. D. Pratt on July 19, 1960, are also primarily directed to devices for locating and removing plant bulbs after the growing season. Accordingly, such devices are not composed of biodegradable material. Such devices are also overly elaborate and expensive to mass produce and market.

Accordingly, the need has arisen for a planting apparatus for planting bulbs at a preferred depth which can be simply and economically manufactured and marketed.

In accordance with the invention, there is provided an apparatus and method for planting plant bulbs in soil at a preferred soil depth. The apparatus includes a water-porous bag for enclosing a plant bulb, a filament attached to the bag of sufficient length such that the filament extends above the soil surface when the plant bulb is planted at a preferred soil depth and an identifier element attached to the filament for identifying the variety and flower colour of the plant bulb enclosed in the bag. The identifier element is connected to the filament at a point which extends above the soil surface when the bulb is planted at its preferred soil depth.

The bag is preferably composed of biodegradable material and may consist of a flexible netting having a plurality of apertures. The identifier element is preferably a non-biodegradable material, such as a plastic label.

Advantageously, the filament may be composed of a strand of flexible material such as Nylon™ or plastic. The filament may be marked at a predetermined distance from the bottom of the bag to indicate the preferred depth for planting the bulb.

The present invention also includes a method of marketing plant bulbs including the steps of providing a water-porous bag, enclosing a plant bulb of known variety and flower colour in the bag, providing a filament having one end attached to the bag, providing a label secured to the filament adjacent the other end of the filament which identifies the bulb's variety and flower colour, and offering the bag, bulb, filament and attached label for sale to consumers as a unitary package.

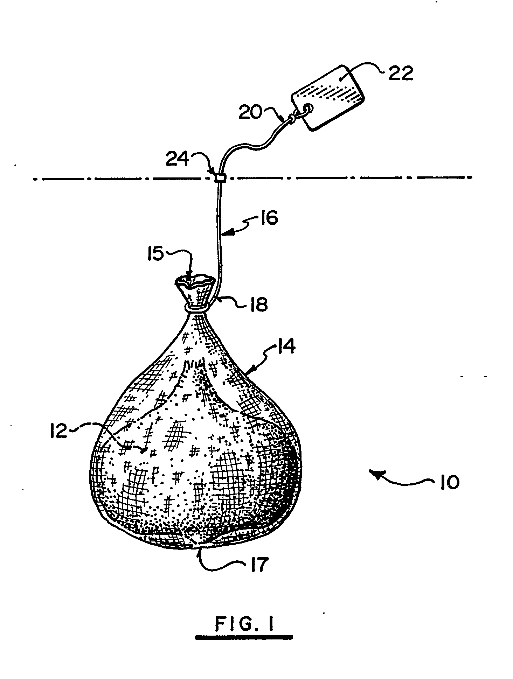

Figure 1 is a side elevation view of a plant bulb planting apparatus constructed in accordance with the preferred embodiment of the invention.

As shown in Figure 1, planting apparatus 10 includes bag 14 and filament 16. Bag 14 is designed to enclose a single plant bulb 12. Tulip bulbs and gladiola bulbs are typical of the plant bulbs which may be used with the present invention.

Bag 14 is composed of a suitably porous material, such as flexible stranded netting, to allow water, air, nutrients and other soil constituents to come in contact with bulb 12 after it is planted. The porosity of bag 14 also helps to prevent plant bulb 12 from rotting during storage prior to planting.

Bag 14 is also preferably biodegradable so that it does not impede the growth of bulb 12 after planting. Bag 14 may have an open mouth 15 and a closed bottom 17 to facilitate insertion of plant bulb 12 into bag 14.

Planting apparatus 10 also includes a filament 16 having a bag end 18 and a free end 20. Bag end 18 is securely attached to bag 14 in any suitable manner, such as by tying filament 16 around bag mouth 15 to close the bag around bulb 12. Filament 16 is preferably made of flexible material, such as Nylon™ or plastic twine of sufficient length such that free end 20 will extend above the soil surface when plant bulb 12 is lowered to the preferred planting depth in a planting hole.

Planting apparatus 10 further includes an "identifier means"; namely, identifier element 22 for labelling bulb 12. For example, identifier element 22 may identify the variety and the colour of the flowers that will grow from the bulb. Identifer element 22 may also provide detailed planting instructions. Identifier element 22 is intended to extend above the soil surface to provide an on-going indication of the bulb variety and flower colour after bulb 12 is planted. Accordingly, identifier element 22 is preferably made of non-biodegradable material so that the bulb variety and flower colour can be readily identified at any point during the growing season. This is of assistance if the gardener wishes to change the colour scheme or otherwise alter the overall visual effect of the garden after planting the bulbs.

In order to achieve optimal plant growth it is preferable to plant bulbs at a particular depth in the garden soil. The preferred planting depth typically varies with different species of plants. Accordingly, planting apparatus 10 includes a depth marker 24 located at a predetermined interval on filament 16 above bag bottom 17 to assist in planting plant bulb 12 at the preferred depth for the particular plant variety in question.

In operation, the gardener grasps the free end 20 of filament 16 and lowers bag 14 into a planting hole until marker 24 on filament 16 is level with the soil surface. The planting hole may then be filled with garden soil to maintain bulb 12 at its preferred planting depth.

The placement of marker 24 is predetermined to correspond with the preferred planting depth for the particular bulb contained in bag 14. Thus, it is unnecessary for the gardener to make manual measurements to ensure that the bulb is planted at the preferred depth.

Alternatively, depth marker 24 may be omitted from filament 16 of planting apparatus 10. In this alternative embodiment, the length of filament 16 will vary according to the preferred planting depth of the particular bulb 12 contained in bag 14. In operation, the bulb containing bag 14 is lowered into the planting hole until the lower end of identifier element 22 is level with the soil surface. The planting hole may then be filled with garden soil to maintain bulb 12 at its preferred planting depth. Identifier element 22 extends above the soil surface to indicate the variety and colour of bulb 12 as aforesaid.

As will be apparent to those skilled in the art in the light of the foregoing disclosure, many alterations and modifications are possible in the practice of this invention without departing from the spirit or scope thereof. Accordingly, the scope of the invention is to be construed in accordance with the substance defined by the following claims.

## Claims

1. Apparatus for planting a plant bulb in soil at a preferred soil depth, comprising:

(a) a water-porous bag for enclosing the plant bulb;

(b) a filament attached to the bag; and

(c) identifier means for identifying the plant bulb, the identifier means being connected to the filament at a point which extends above the soil surface when the plant bulb is planted at the preferred depth.

2. Apparatus according to claim 1, wherein the bag is composed of a biodegradable material.

3. Apparatus according to claim 1 or 2, wherein the identifier means comprises a non-biodegradable label attached to the filament.

4. Apparatus according to any preceding claim, wherein the bag comprises a flexible netting having a plurality of apertures.

5. Apparatus according to any preceding claim, wherein the filament is made of a flexible material.

6. Apparatus according to claim 5, wherein the filament is a single strand of a nylon or other plastics material.

7. Apparatus according to any preceding claim, wherein the bag has a closed bottom end and an open mouth, and wherein one end region of the filament is adapted to close the open mouth.

8. Apparatus according to any preceding claim, wherein the filament has a first end and a second end, and wherein the bag is attached to the filament first end and the identifier means is attached to the filament second end.

9. Apparatus according to any preceding claim, wherein the apparatus is provided with means for indicating the preferred depth for planting the bulb.

10. Apparatus according to claim 9, wherein the filament is provided with a marker at a predetermined distance from the bottom of the bag, which predetermined distance is equal to the preferred depth for planting the plant bulb.

11. Apparatus according to claim 9, wherein the identifier means is connected to the filament at a predetermined distance from the bottom of the bag, which predetermined distance is equal to the preferred depth for planting the bulb.

12. A unitary package for a plant bulb, comprising:

(a) apparatus according to any one of claims 1 to 11; and

(b) a plant bulb of known variety and flower colour which is contained in the bag.

13. A unitary package according to claim 12, wherein the identifier means is in the format of a label which identifies the bulb's variety and flower colour.

14. A method of planting bulbs using a unitary package according to claim 12 or 13, when comprising apparatus according to claim 10, which method comprises:

(a) lowering the bag to the preferred planting depth in a planting hole until the marker is level with the soil surface; and

(b) placing soil around the bulb to maintain the bulb at the preferred planting depth.

15. A method of planting bulbs, using a unitary package according to claim 12 or 13, when comprising apparatus according to claim 11, which method comprises:

(a) lowering the bag into a planting hole to the preferred planting depth until the filament end to which the identifier means is attached is level with the soil surface and the identifier means extends above the soil surface; and

(b) placing soil around the bulb to maintain the bulb at the preferred planting depth.

FIG. 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | US-A-3 415 012 (STUBBMANN)<br>* Column 3, line 50 - column 5, line 2; figures 2-6 * | 1,3,4,9,12,14,15 | A 01 G 9/00 |
| A | WO-A-8 203 530 (FAR WEST BOTANICALS)<br>* Abstract; figure 2 * | 1,2,4 | |
| A,D | US-A-2 394 192 (MANN)<br>* Page 1, left-hand column, lines 1-9; page 1, right-hand column, line 11 - page 2, right-hand column, line 37; page 2, right-hand column, line 63 - page 3, left-hand column, line 6; figures 1,2 * | 1,3,9,12-15 | |
| A,D | US-A-2 945 323 (PRATT)<br>* The whole document * | 1,3,12-15 | |
| A | DE-U-8 008 438 (HUMMEL)<br>* Page 1, claims 1,2-6; figure * | 1,3,9,12-15 | |
| | | | **TECHNICAL FIELDS SEARCHED (Int. Cl.5)**<br><br>A 01 G<br>B 65 D |

The present search report has been drawn up for all claims

| Place of search | Date of completion of the search | Examiner |
|---|---|---|
| THE HAGUE | 10-05-1990 | PERNEY Y.J. |